# EUROPEAN PATENT SPECIFICATION

(11) **EP 0 567 522 B1**
(45) Date of publication and mention of the grant of the patent: **24.04.1996**
(21) Application number: 92903182.1
(22) Date of filing: 24.01.1992
(51) Int. Cl.: B60J 5/04

(54) **STRUCTURAL MODULE FOR A VEHICLE DOOR**
VERSTÄRKUNGSSTRUKTUR FÜR EINE FAHRZEUGTÜR
MODULE STRUCTURAL POUR LA PORTIERE D'UN VEHICULE

(30) Priority: 25.01.1991 CA 2034937; 25.01.1991 CA 2054577
(43) Date of publication of application: 03.11.1993
(73) Proprietor: MULTIMATIC INC., Markham, Ontario L3R 5E5 (CA)
(72) Inventor: HOLT, Larry, Sandford, Ontario L0C 1E0 (CA)
(74) Representative: Moir, Michael Christopher
(86) International application number: CA9200028
(87) International publication number: WO9212871

(56) References cited:
- EP-A- 0 056 849
- EP-A- 0 291 107
- GB-A- 2 191 156

## Description

### FIELD OF INVENTION

This invention relates to structural modules for doors suitable for mounting in vehicles and particularly to structural modules (hardware cassettes) for carrying the load of the door while providing protection from side impacts.

### BACKGROUND OF THE INVENTION

Side doors of vehicles comprise inner and outer door panels and the hardware accessories secured between the panels. More recently, intrusion beams have been positioned between the panels to offer protection from side impacts. For example EP-A-0.291.107 discloses a door in which two substantially horizontal vertically-spaced reinforcement girders are provided. Also more recently a modular approach has been taken with respect of the assembly of the door. In a joint proposal by the Budd Company Stamping and Frame Division and ITT Automotive a modular door hardware plate assembly was proposed which is pre-assembled with the hardware and pre-tested before assembly into the door. The heart of the modular assembly proposal is a stamped module plate which purportedly locates and supports all internal door hardware. The stamped plated assembly with components is then assembled to the door. The plate alone however is not sufficient to provide protection from side impact.

Another proposal was made jointly by Bayer AG and Dynamit Nobel AG of Germany in CA-A-1.273.975. The basic features of the modular composite door prototype were an inner steel skeleton structure encapsulated with in a polyurethane, and an outer panel made of polyurea.

The skeleton of the inner panel was proposed to be a welded steel frame made of rolled sections and stampings. The skeleton is attached on one side to a hinge plate and on the other to the housing for the latch mechanism. Bent cross-members extend from one side of the skeleton proximate the housing for the latch mechanism to the other side of the skeleton. Braces secure the cross-members. The skeleton does not however provide the primary side impact protection.

It is therefore an object of this invention to provide a structural module for a vehicle door capable of carrying the load of the door, preclude sag, and afford protection to passengers riding in a vehicle from side impact.

Federal Motor Vehicle Safety Standard No. 571.214 specifies door strength requirements which minimize the safety hazard caused by intrusion into the passenger compartment in a side impact accident. This standard specifies 2250 lbs (10000 N) as the initial crush resistance for a side door. The initial crush resistance is defined as the average force required to deform the door over the initial 6" (150 mm) of the crush. This crush test is performed by a vertical cylindrical intruder. The load versus displacement curve is plotted while a quasi-static load is applied to the door by the intruder in an inboard direction until the intruder travels 6". The integral of the applied load with respect to the crush distance for 0" to 6" divided by 6 is the average force in pounds required to deflect the door that distance.

Where an intrusion beam is used in a door, a graph plotted of force versus displacement provides generally a characteristic curve. (See Figure A)

The characteristic curve has three distinct sections. The curve begins with a linear slope which has been previously established to be dependent on the geometric bending stiffness of the beams and their end conditions. This is followed by a sharp change in the slope (first peak) which is due to the yielding, or more likely, plastic buckling of the central region of the beam. Finally the curve follows a somewhat lower slope (virtually flat) in which post buckling deformations occur. The 6" displacement of the intruder usually includes these three sections. If the test is allowed to continue, the slope of the characteristic curve will change radically toward a steeper curve and ends when the beam fails. This final slope is mainly caused by the membrane stiffness of the tubes. Figure B illustrates the deflection of a single tube when deformed by force F and in respect of which the curve in Figure A applies.

It is a further object of the invention to provide an improved structural module which is easy to assemble and mount. Particularly in the past it has been difficult to mount hardware, raise and lower the window in the door, and still provide protection from side impact.

Further and other objects of the invention will be realized by those skilled in the art from the following summary of the invention and detailed description of an embodiment thereof.

### SUMMARY OF THE INVENTION

According to one aspect of the invention there is provided a reinforcing structure suitable for use in a vehicle door, the reinforcing structure comprising a pair of tubes spaced laterally of each other such that upon a side impact upon the door one said tube is deformed before the other.

The reinforcing structure may be for example a structural module (preferably a hardware cassette) and may comprise preferably a mounting member (preferably a hinge mounting portion and in one embodiment a latch mounting portion) and the tubes, each tube having two ends, preferably one end of each tube being connected to the preferred mounting member, preferably when at least three tubes are used a first tube being connected to the preferred mounting member and, a pair of laterally spaced tubes preferably extending substantially in parallel planes and in one embodiment extending in a substantially parallel direction and preferably connected to the mounting member and preferably to the hinge mounting portion and preferably spaced from the first tube when at least three tubes are present. Thus in essence in simple terms the pair of laterally spaced tubes provide a reinforcing structure for the vehicle door providing progressive side impact strength.

According to another aspect of the invention there is provided a structure suitable for use in a vehicle door comprising a converging arrangement of tubes directly connecting hinge components to a latch mounting member thereby providing a direct load path to the surrounding pillar structures in the case of impact longitudinally of the vehicle, two of said tubes being connected between a lower hinge component and the latch mounting, and spaced apart laterally of the door so that upon a side impact upon the door one said tube is deformed before the other.

Thus a structural module (hardware cassette) suitable for use in the assembly of a vehicle door, may comprise a latch mounting member and tubes, each tube having two ends, one end of each tube being connected to the latch mounting member, a first tube connected to the latch mounting member and, spaced from the first tube, a pair of laterally spaced tubes preferably extending substantially in parallel planes and in one embodiment extending in a substantially parallel direction and connected to the latch mounting member.

In a preferred form of the invention there is provided a structural module (hardware cassette) suitable for use in the assembly of a vehicle door, the structural module comprising a latch mounting member, a pair of door hinge assembly components (a lower door hinge component and an upper door hinge component) vertically spaced from one another when mounted in a vehicle, and tubes (for example round 1¹/₂" tubes) connecting the hinge components to the latch mounting member, one tube (upper tube) connecting the upper hinge component to the latch mounting member and extending substantially horizontally from the upper hinge component to the latch mounting member when mounted in the vehicle and a pair of laterally spaced tube preferably extending substantially in parallel planes and in one embodiment extending in a substantially parallel direction and (in one embodiment spaced 3" center to center) connected to the lower hinge component (for example by welding) and the latch mounting member.

In some embodiments the ends of the pair of the laterally spaced tubes are flattened prior to being connected to the hinge components and latch mounting member. The flattening provides assurance of the necessary deflection required for the correct performance of the structural module. Preferably the ends of the upper tube are not flattened for better load transmission as a belt reinforcement. In another embodiment, the ends of the tubes may be scalloped (cut on an angle) by conventional methods prior to the tubes being connected to the hinge components and latch mounting member. Preferably the upper tube is not scalloped. Any method of assuring providing the deflection of the tubes of the structural module will be acceptable such as scalloping or flattening as well or any other geometric weakening of the end of the tube which reduces the section modulous thereof.

Thus the basis of the design of the preferred structural module is a substantially triangular arrangement of tubes of closed cross-section (for example round, square) directly connecting the hinges to the latch mounting member which is preferably reinforced. In addition to providing a direct load path to the surrounding pillar structure in the case of a side, frontal, or rearward impact, the triangular arrangement provides the optimum stiffness for sag loadings.

A longitudinal tube runs from the upper hinge component to the latch mounting member and acts as an inner belt reinforcement. Two laterally spaced tubes preferably extending substantially in parallel planes and in one embodiment extending in a substantially parallel direction (for example round, square) are for example welded to the lower hinge component and pick up the latch reinforcement at the rear of the structural module. These tubes may be horizontally offset or spaced. The offset produces a progressive side impact strength. As the outer tube deflects when a force is applied to it, it passes the plane of extension and in one embodiment when the spaced tubes are substantially laterally parallel to one another contacts the inner tube and produces a compound bending section that continues to absorb the strain energy at a much higher rate. The wall thickness and diameter of all the tubes can be adjusted individually to produce the optimum design in terms of the strength to weight ratio of the structural module. The laterally spaced tubes also allow the window glass to drop between them.

With the door hinge components, the tubes acting as belt reinforcement and intrusion beams and the latch mounting member are incorporated into the structural module cassette, and it is possible to install it on a vehicle or fixture and to operate it as a door. This feature allows for more flexibility in terms of inner and outer door skin materials (for example plastic) since all the structural members of the door assembly are contained within the cassette.

All door hardware (window regulator and glass guidance, latch assembly, inner release handle assembly, lock knob assembly and door hinge halves) may be preinstalled on the structural module cassette and adjusted and tested on the cassette. The speaker, window regulator and inner release handle assembly may be carried on a single stamping, rolled section, plate or the like that is secured (for example welded) to the inner belt reinforcement (upper tube) and the inner laterally spaced tube.

A wiring harness for door electrical components including power mirror, window and lock, courtesy lamp and keyless entry system may be attached directly to the cassette. The door harness may be connected to the main wiring harness via a modular connector or connectors.

According to another aspect of the invention a vehicle door may be provided incorporating any of the structural modules as described. In some embodiments the door frame comprises a forward shut face carrying slots for the passage of hinge components therethrough.

The front of the cassette may be loaded into the door frame first and may be netted fore and aft to the inside surface of the door shut face. The forward portion of the window seal/glass guide may then be positioned between the parallel spaced tubes and may be secured to the inner tube via an adjustable bracket. The rear of the cassette may be netted cross car on the rear of the inner panel face. Transverse adjustment of the door assembly is provided by horizontal slots on the forward shut face of the door frame and an adjustable latch striker on the B-pillar. Vertical and fore/aft adjustment is provided by the body half of the door hinges attached to the A-pillar.

The inner trim panel may be attached to the door frame with the armrest attached directly to the inner intrusion tube. An inner pull handle may be attached to the belt reinforcement tube if required.

### BRIEF DESCRIPTION OF THE DRAWINGS

The invention will now be illustrated with respect to the following drawings illustrating embodiments of the invention in which:
Figure 1 is a perspective view of a structural module according to an embodiment of the invention.
Figure 2 is a perspective view of the structural module to which has been installed operational hardware.
Figure 3 is the modified structural module of Figure 2 installed into a car door.
Figure 4 is a view of part of the door of Figure 3 with portions removed.
Figures 5 to 10 are close up views of parts of the car door shown in Figure 3 with portions removed and in Figure 7 showing an alternative latch mounting member configuration.
Figure 11, 11a, 11b, and 11c illustrates various tube orientations and the deflection of the two spaced tubes forming part of the structural module of Figure 1 and other similar embodiments by an applied Force (F) applied to the side of the outer tube.
Figure 12 illustrates the curve by plotting Force versus displacement when the specified Force (F) is applied to the side of the outer tube in Figure 11.
Figure A illustrates a general characteristic curve as described at Page 2, line 21 in the Background of the Invention.
Figure B illustrates the deflection of a single tube as described at Page 2, line 36 of the Background of the Invention.

### DETAILED DESCRIPTION OF PREFERRED EMBODIMENTS OF THE INVENTION

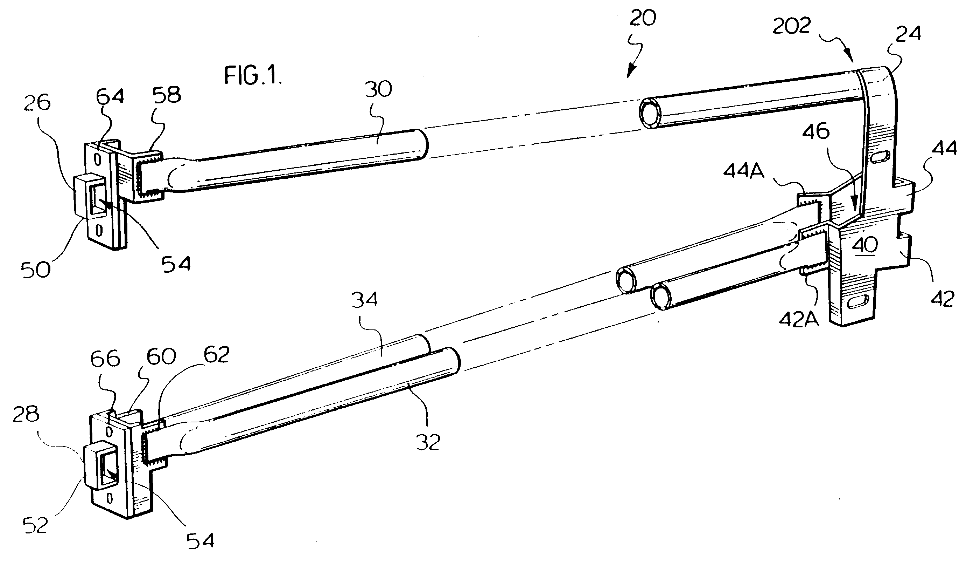

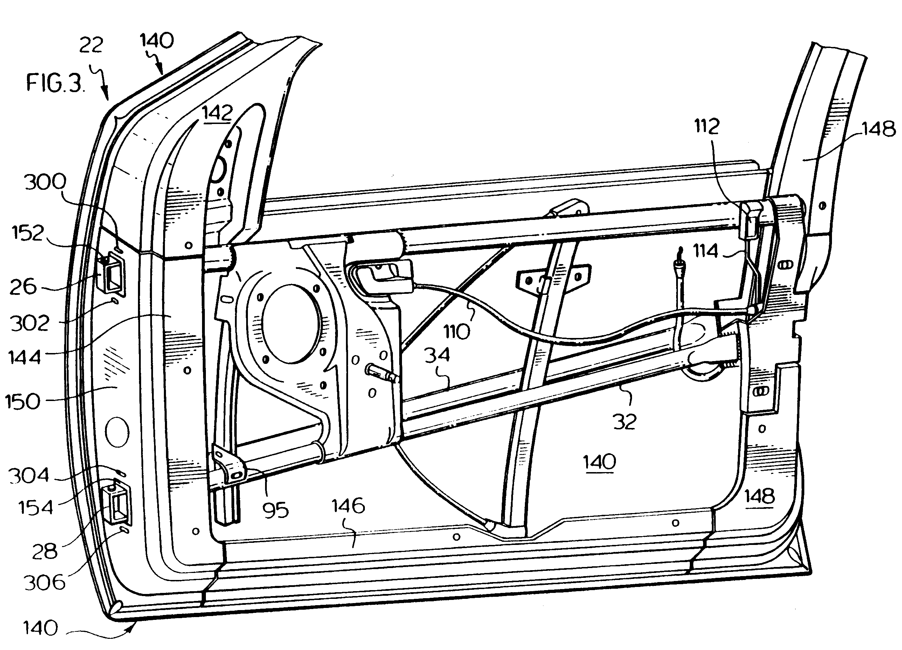

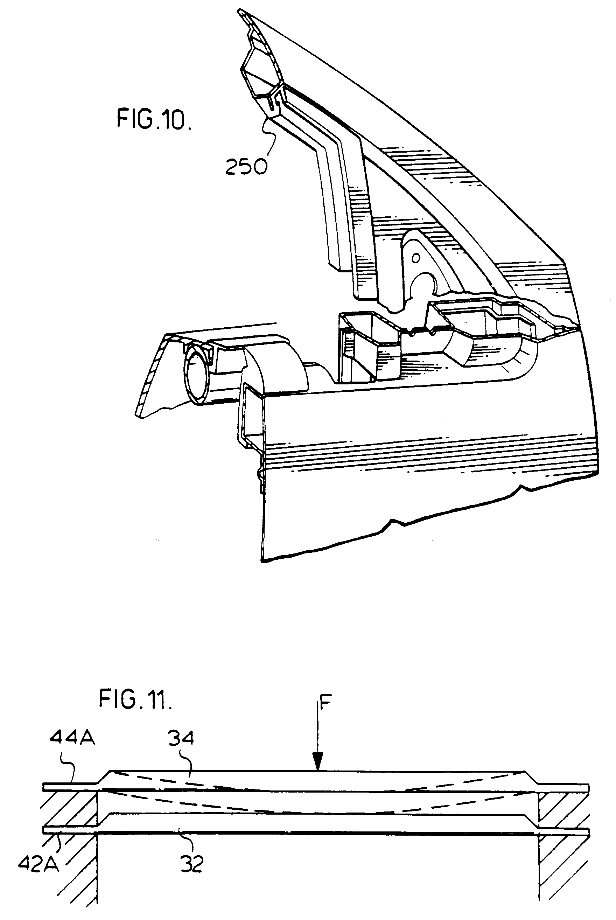

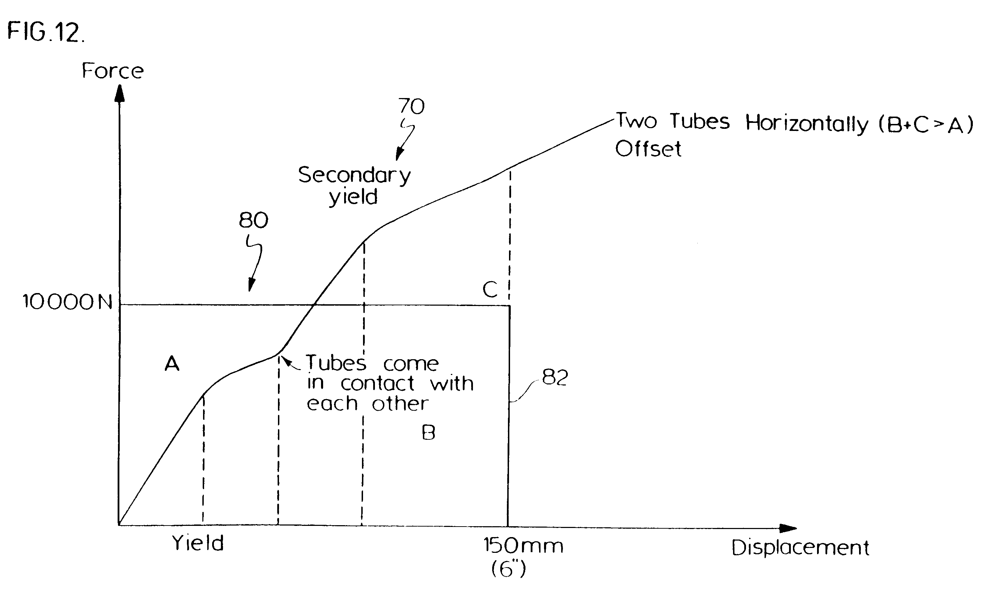

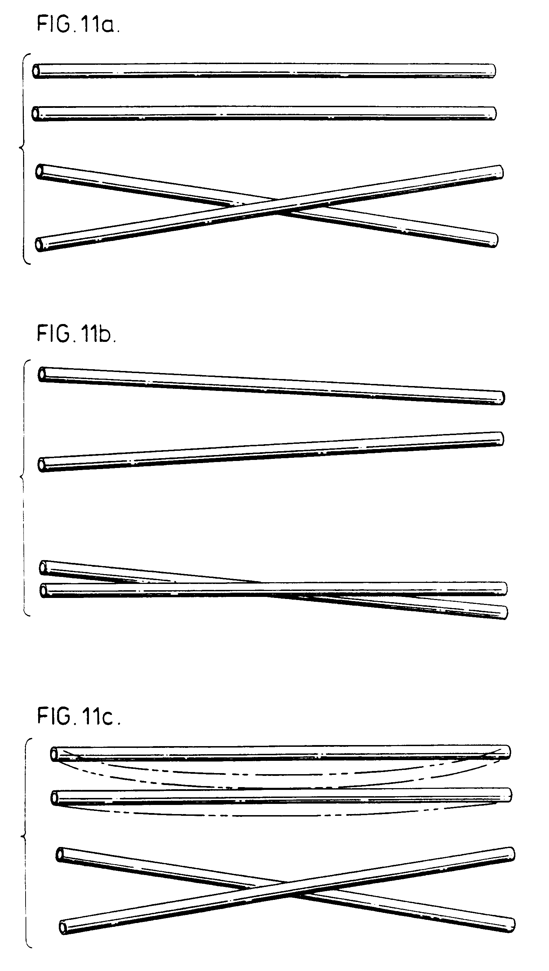

With reference to Figure 1, there is shown structural module 20 suitable for use in the assembly of vehicle door 22 (see Figure 3), structural module 20 comprising latch mounting member 24, a pair of door hinge components 26, 28 vertically spaced from one another when mounted on door 22 (lower door hinge component 28 and upper door hinge component 26) and straight round tubes (1¹/₂" diameter) 30, 32, 34 directly connecting hinge components 26, 28 to latch mounting member 24. Tube 30 connects upper hinge component 26 to latch mounting member 24 and extends substantially horizontally between the two components when mounted on vehicle door 22. A pair of laterally spaced preferably parallel tubes 32, 34 (spaced 3" from center to center) connect lower hinge component 28 and latch mounting member 24. In one embodiment the tubes are parallel in the top view only (as best seen in Figure 11a) but appear to intersect in side view. In other embodiments exemplified by Figure 11b the laterally spaced tubes may be oriented to ultimately converge or diverge but remain effectively laterally spaced between the outer end edges of the vehicle door. To assist with the performance of the structural module tubes 32 and 34 have their ends flattened and welded to latch mounting member 24 and to arms 60 and 62 of plate 66 secured to hinge component 28 as shown. The flattening provides assurance of the necessary deflection required for the correct performance of the structural module. Any other method of assuring providing the deflection of the structural module will be acceptable as well, such as flattening, scalloping or any other geometric weakening of the tube ends which reduces the section modulous thereof. Tube 30 has only one end flattened. This end is connected (welded) to arm 58 of plate 64 secured to hinge component 26 as shown. The other unflattened end 202 is welded to latch mounting member 24.

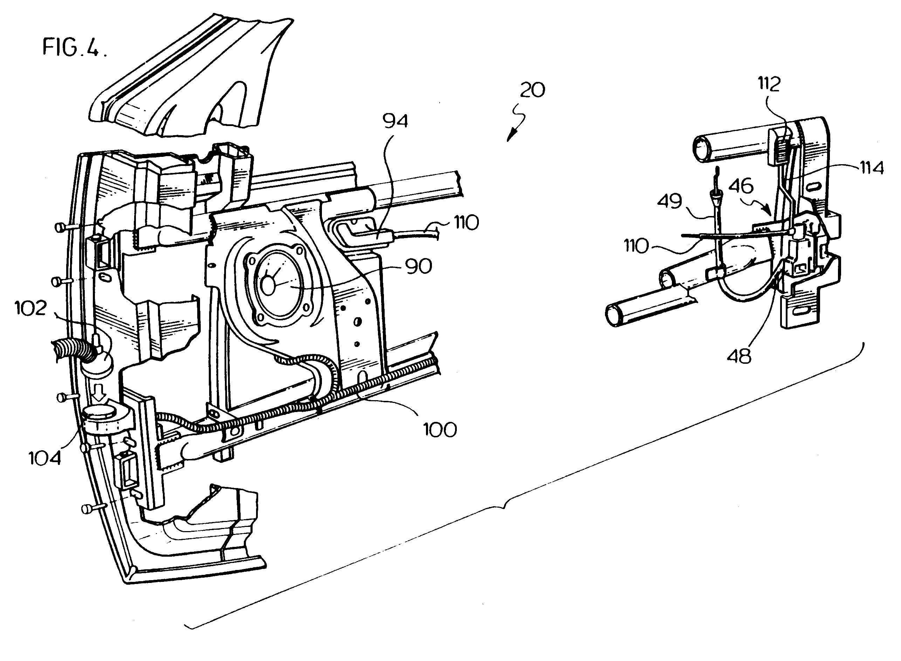

Latch mounting member 24 includes plate 40 comprising two spaced wrap around arms 42 and 44 bent to provide recess 46 for receiving and mounting latch mechanism 48 (see Figure 4). The ends 42A and 44A of the arms 42 and 44 are welded to the ends of tubes 32 and 34. Each of hinge components 26 and 28 comprise brackets 50 and 52 through which pins 54 pass (for connecting to the hinge component on the A-pillar (not shown) of a vehicle).

As is apparent, structural module 20 is generally triangular in shape. In addition to providing a direct load path to the surrounding pillar structure of the vehicle (not shown) in the case of a side impact, this triangular arrangement provides optimum stiffness for sag loadings.

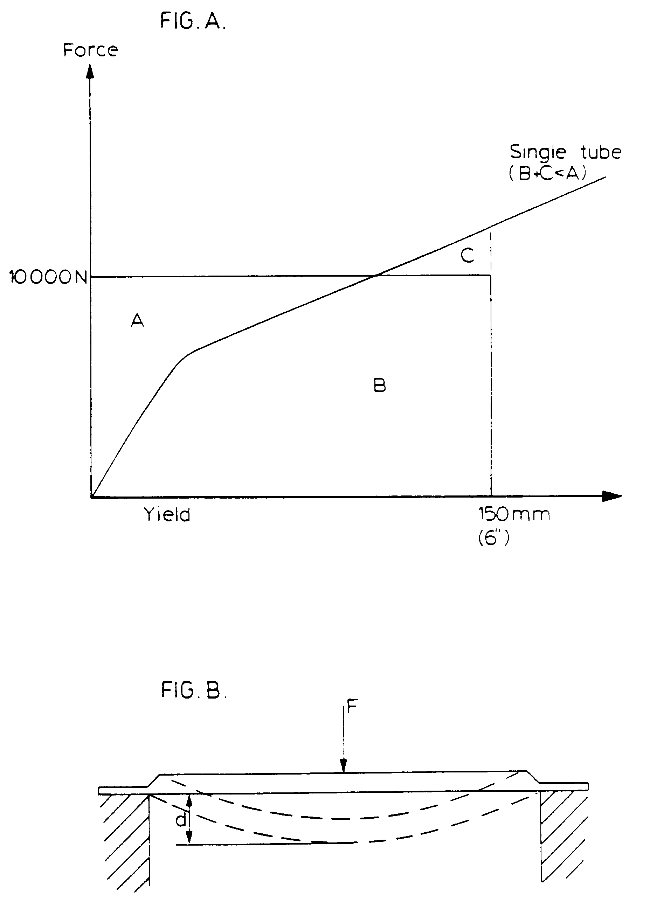

The two parallel tubes 32, 34 are offset horizontally a distance of 3" center to center. This offset produces a progressive side impact strength. As the outer tube 34 deflects it in one embodiment as seen in Figure 11 contacts inner tube 32 or as best seen in relation to Figures 11a, 11b, and 11c passes the vertical plane of extension of the inner tube without contacting the tube and produces a compound bending section that continues to absorb the impact strain energy at a much higher rate. The curve in Figure 12 has the initial characteristics of the curve shown in Figure A until tube 34 meets tube 32 shown in Figure 11 or passes the vertical plane of extension of the inner tube as seen in relation to Figures 11a, 11b, and 11c,. Thereafter the curve continues with a linear slope dependent on the geometric bending stiffness of the tubes together and their end conditions (for example flattened, unflattened and scalloped or the like). This is followed by a change in the slope at secondary yield at 70 which is due to the yielding or more likely, plastic buckling of the central regions to the tubes. Finally the curve follows a somewhat lower slope in which post buckling deformation occurs. Because the area of rectangle "A" made up by the sides 80 and 82 (see Figure 12) is less than the areas of "B" & "C" under the curve, the initial crush phase of government safety standard Federal Motor Vehicle Safety Standard No. 571.214 is satisfied. As best seen in Figures 11, and 11 a-c, the laterally spaced tubes may be parallel as seen in Figure 11, parallel in the vertical plane as seen in Figure 11a or divergent as seen in Figure 11b.

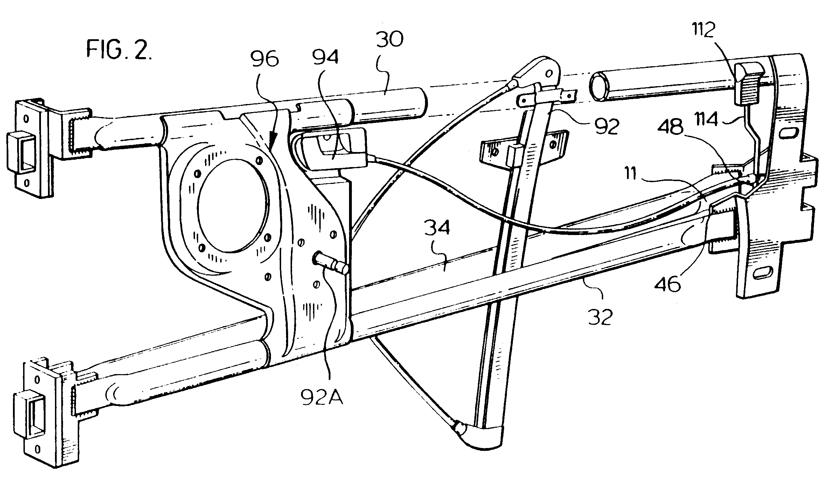

All door hardware may be pre-installed on structural module cassette 20 (shown in Figure 2). Tube 30 acts as an inner belt reinforcement. Speaker 90 (see Figure 4), window regulator 92 with stem 92A to receive a handle (not shown), and inner release handle assembly 94 are carried on single stamping 96 welded to tube 30 and tube 32.

A complete wiring harness 100 (see Figure 4) for all electrical components (including power mirror, window and lock, courtesy lamp and keyless entry system) is attached directly to the cassette 20. The door harness 100 is connected to the main wiring harness 102 in a single modular connector 104. The latch mechanism 48 mounted in recess 46 carries cable 49 leading to the outside release handle for outside release. Inner release handle assembly 94 is connected to latch mechanism 48 via cable 110. Lock knob 112 is attached to latch mechanism 48 by rod 114.

Window regulator 92 carries a glass window which like regulator 92 is positioned between tubes 32 and 34.

Pre-assembled structural module is then installed into door 22. In this regard (with reference to Figures 3 and 4) door 22 comprises outer skin 140, frame components 142, 144, 146 and 148 comprising door shut faces, for example face 150 of component 144. Face 150 comprises two openings 152 and 154 for passing hinge components 26 and 28 through the door for connection to hinge components on the A-pillar.

The front of the cassette may be loaded into the door frame first and may be netted fore and aft to the inside surface of the door shut face. The forward portion of the window seal/glass guide may then be positioned between the parallel tubes and is secured to the inner tube 32 via an adjustable bracket 95 (see Figure 3). The rear of the cassette may be netted cross car on the rear of the inner panel face 148. Transverse adjustment of the door assembly is provided by horizontal slots 300, 302, 304 and 306 (see Figure 3) on the forward shut face 150 of the door frame member 144 and an adjustable latch striker (not shown). Vertical and fore/aft adjustment is provided by the body half of the door hinges (not shown).

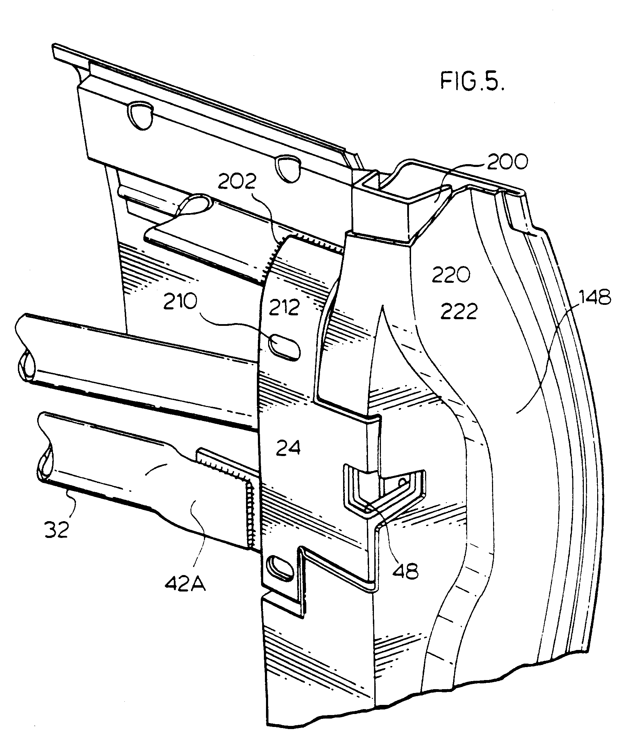

With reference to Figures 5 to 10 inclusive, cross-sections through door assembly 22 and components of structural module 20 (and a modification thereto) exposing the different cross-sections and door reinforcing portions (shown in dark) are shown.

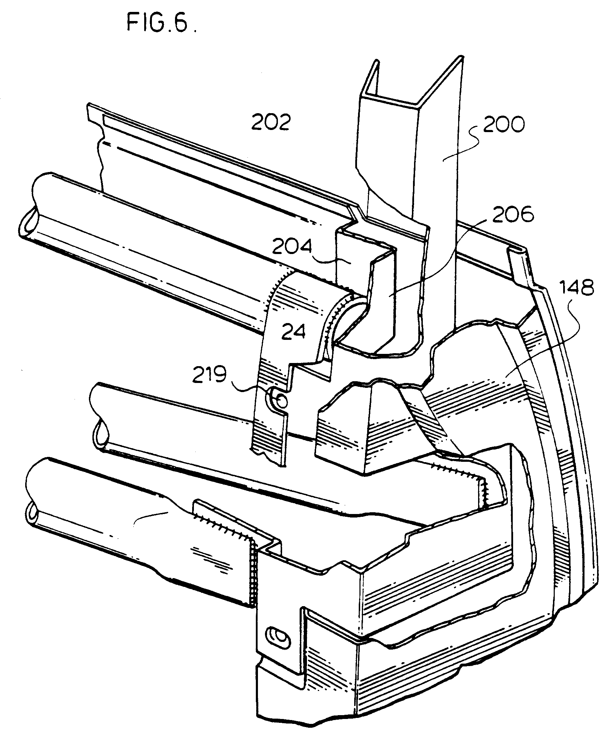

Particularly with reference to Figures 5 and 6 structural reinforcement has been added to the door. In this regard reinforcing stamped steel "C" section 200 is interposed between door member 148 and the longitudinal unflattened end 202 of tube 30. In this regard the end 202 of tube 30 sits in recess 204 of member 200 and abuts wall portion 206. Thus any load transmitted along tube 30 is transmitted into reinforcing section 200 which contacts door member 148 which is forced into "B" pillar (not shown) in a frontal collision transmitting the forces into the "B" pillar. Thus section 200 acts as a stiffener. Section 200 is connected by a fastener 210 passing through slotted aperture 212 of latch mounting member 24 and aperture 214 through section 200. A metal tab extending from member 148 extends between latch mounting member 24 and section 200. Door member 148 is spot welded to section 200 at the "X"s as at 220 and 222.

Thus by adding stiffener 200 and fastening structural module 20 thereto, not only is the longitudinal and sag strength of the door increased, but also side impact load strength.

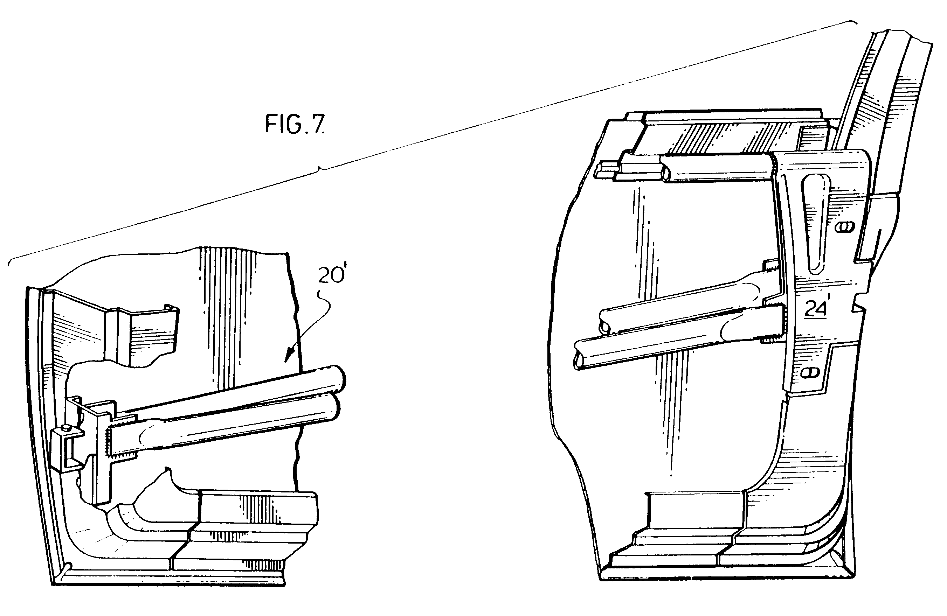

With reference to Figure 7, structural module 20' is shown (in part) substantially the same as structural module 20 except that latch mounting member 24' replaces latch mounting member 24. Member 24' is broader and stronger.

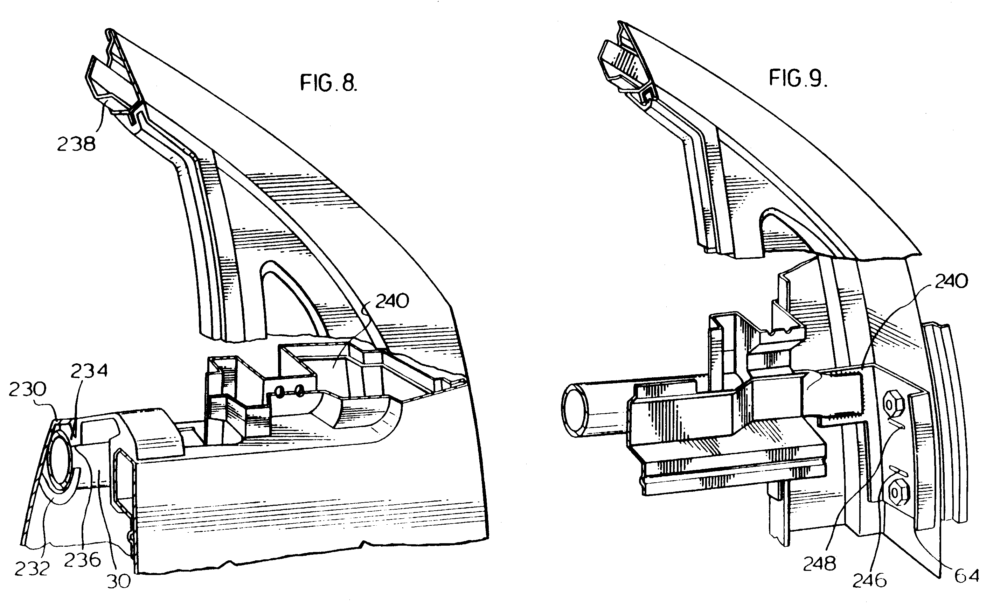

Figure 8 illustrates the car door 22 partly in section looking from the outside. Tube 30 supports interior door trim panel 230 attached by a fastener extending under the tube (for example a snap fastener or clip) as at 237. Window seal 234 is attached to the inner trim panel 230 by hook portion 236 sandwiched between tube 30 and inner trim panel 230. Further reinforcement of the door is shown at 238 and 240. Reinforcement 240 reinforces the upper hinge component 26 in the form of a "C" section welded in the door. Reinforcement 238 in the form of a "C" section stiffens the window frame.

With reference to Figure 9, a cut away view of the door, tube 30 is shown welded to plate assembly 64 to which hinge component 26 is welded through rectangular openings 246 and 248. Plate 64 is welded to reinforcement member 240. While in this embodiment tube 30 is flattened at its end connected to plate assembly 64 prior to welding to plate assembly 64, the tube end may not be flattened but left round for better transmission of the longitudinal forces as a result of a frontal or rearward crush.

Figure 10 highlights the upper seal section of the window at 250.

As many changes can be made to the various embodiments of the invention without departing from the scope of the invention as defined by the claims, it is intended that all material contained herein be interpreted as illustrative of the invention and not in a limiting sense.

## Claims

1. A reinforcing structure suitable for use in a vehicle door, the reinforcing structure comprising a pair of tubes (32,34) spaced laterally of each other such that upon a side impact upon the door one said tube is deformed before the other.

2. The structure of Claim 1, comprising a mounting member (24), one end of each tube (32,34) being connected to the mounting member.

3. The structure of Claim 2, wherein said mounting member comprises a latch mounting portion (24).

4. The structure of Claim 2 or Claim 3, wherein at least three tubes (30,32,34) are used, a further tube (30) being connected to the mounting member (24) and spaced from the pair of laterally spaced tubes (32,34).

5. The structure of any preceding claim, further including a hinge mounting portion (26,28).

6. The structure of any preceding claim, wherein said pair of tubes (32,34) extend substantially in parallel planes.

7. The structure of Claim 6, wherein said pair of tubes (32,34) extend substantially parallel to each other.

8. The structure of any of Claims 1 to 5, wherein the laterally spaced tubes (32,34) are oriented to ultimately converge or diverge but remain effectively laterally spaced between the outer end edges of the vehicle door.

9. The structure of any preceding claim, wherein the outer tube (34) upon deflection thereof passes the plane of extension of the inner tube (32), the two tubes then forming a compound bending section that tubes then forming a compound bending section that continues to absorb the strain energy at a higher rate than the outer tube alone.

10. The structure of Claims 6 and 9, wherein upon deflection the outer tube (34) contacts the inner tube (32).

11. A structure suitable for use in a vehicle door comprising a converging arrangement of tubes (30,32,34) directly connecting hinge components (26,28) to a latch mounting member (24) thereby providing a direct load path to the surrounding pillar structures in the case of impact longitudinally of the vehicle, two of said tubes (32,34) being connected between a lower hinge component (28) and the latch mounting (24), and spaced apart laterally of the door so that upon a side impact upon the door one said tube is deformed before the other.

12. The structure of Claim 11, comprising an upper tube (30) running from an upper hinge component (26) to the latch member (24) acting as an inner belt reinforcement.

13. The structure of Claim 2, Claim 5, or Claim 11, wherein ends of the pair of the laterally spaced tubes (32,34) are flattened at their connections to the mounting member (24) and/or the hinge portion (26,28).

14. The structure of Claims 11 and 13, wherein of the ends of the upper tube (30), at least that end (202) connected to the latch mounting member (24) is not flattened.

15. The structure of any of claims 1 to 12, wherein at least some of the ends of the tubes (30,32,34) are scalloped.

16. The structure of Claim 1, comprising a latch mounting member (24), one end of each laterally-spaced tube (32,34) being connected to the latch mounting member, a further tube (30) being connected to the latch mounting member and spaced from the laterally spaced tubes.

17. The structure of Claim 1, comprising a latch mounting member (24), a pair of door hinge assembly components (a lower door hinge (28) component and an upper door hinge component (26)) vertically spaced from one another when mounted in a vehicle, laterally spaced tubes (32,34) being connected to the lower hinge component and the latch mounting member, a further tube (30) connecting the upper hinge component to the latch mounting member and extending substantially horizontally from the upper hinge component to the latch mounting member when mounted in the vehicle.

18. The structure of any preceding claim further comprising at least one item of door hardware (for example window regulator (92), glass guidance, latch assembly (48), inner release handle assembly (94), lock knob assembly (112) and door hinge halves) pre-installed on the structure.

19. The structure of Claim 18 when dependent from Claim 4 or Claim 12, comprising a single stamping, rolled section, plate or the like (96) that is attached to the further or upper tube (30) and to the inner tube (32) of the pair of laterally spaced tubes (32,34).

20. A vehicle door embodying the structure of any preceding claim.

21. A vehicle door (22) comprising a door frame (142,144,146,148) and a structural module, the structural module comprising a latch mounting member (24), a lower door hinge component (28) and an upper door hinge component (26) spaced from one another when mounted in a vehicle, an upper tube (30) connecting the upper hinge component to the latch mounting member and extending substantially horizontally from the upper hinge component to the latch mounting member when mounted in the vehicle, and a pair of laterally spaced tubes (32,34) connecting the lower hinge component to the latch mounting member, the door frame having a forward shut face (150) carrying openings (152,154) for the passage of the hinge components (26,28) therethrough, the laterally spaced tubes (32,34) providing a reinforcing structure for the door such that upon a side impact upon the door one said tube is deformed before the other.

## Patentansprüche

1. Verstärkungsstruktur, die zur Verwendung in einer Fahrzeugtür geeignet ist, wobei die Verstärkungsstruktur ein Paar Rohre (32, 34) aufweist, die seitlich so voneinander beabstandet sind, daß bei einem seitlichen Aufprall auf die Tür ein Rohr vor dem anderen verformt wird.

2. Struktur nach Anspruch 1, welche ein Befestigungsbauteil (24) aufweist, wobei ein Ende jedes Rohrs (32, 34) mit dem Befestigungsbauteil verbunden ist.

3. Struktur nach Anspruch 2, bei der das Befestigungsbauteil einen Rastbefestigungsabschnitt (24) aufweist.

4. Struktur nach Anspruch 2 oder Anspruch 3, bei der mindestens drei Rohre (30, 32, 34) verwendet werden, wobei ein weiteres Rohr (30) mit dem Befestigungsbauteil (24) verbunden und von dem Paar seitlich beabstandeter Rohre (32, 34) beabstandet ist.

5. Struktur nach einem der vorhergehenden Ansprüche, die ferner einen Gelenkbefestigungsabschnitt (26, 28) aufweist.

6. Struktur nach einem der vorhergehenden Ansprüche, bei der das Paar der Rohre (32, 34) sich im wesentlichen in parallelen Ebenen erstreckt.

7. Struktur nach Anspruch 6, bei der sich das Paar der Rohre (32, 34) im wesentlichen parallel zueinander erstreckt.

8. Struktur nach einem der Ansprüche 1 bis 5, bei der die seitlich beabstandeten Rohre (32, 34) so ausgerichtet sind, daß sie letztlich konvergieren oder divergieren, aber zwischen den äußeren Endkanten der Fahrzeugtür wirksam seitlich voneinander beabstandet bleiben.

9. Struktur nach einem der vorhergehenden Ansprüche, bei der das äußere Rohr (34) bei seiner Durchbiegung durch die Verlängerungsebene des inneren Rohrs (32) hindurchgeht, wobei die beiden Rohre dann einen zusammengesetzten Biegeabschnitt bilden, der weiterhin Spannungsenergie mit einem höheren Rate absorbiert als das äußere Rohr alleine.

10. Struktur nach den Ansprüchen 6 und 9, bei der das äußere Rohr (43) bei der Durchbiegung mit dem inneren Rohr (32) in Kontakt kommt.

11. Zur Verwendung in einer Fahrzeugtür geeignete Struktur mit einer konvergierenden Anordnung von Rohren (30, 32, 34), die Gelenkbauteile (26, 28) direkt mit einem Rastbefestigungsbauteil(24) verbinden, wodurch im Falle eines Aufpralls längs zum Fahrzeug ein direkter Belastungsweg durch die umgebenden Säulenstrukturen bereitgestellt wird, wobei zwei der Rohre (32, 34) zwischen einem unteren Gelenkbauteil (28) und der Rastbefestigung (24) verbunden und seitlich von der Tür beabstandet sind, so daß bei einem seitlichenten Aufprall auf die Tür ein Rohr vor dem anderen verformt wird.

12. Struktur nach Anspruch 11, mit einem oberen Rohr (30), das von einem oberen Gelenkbauteil (26) zum Rastbauteil (24) läuft, das als eine innere Gurtverstärkung wirkt.

13. Struktur nach Anspruch 2, Anspruch 5 oder Anspruch 11, bei der Enden des Paares der seitlich beabstandeten Rohre (32, 34) an ihren Verbindungen mit dem Befestigungsbauteil (24) und/oder dem Gelenkabschnitt (26, 28) abgeflacht sind.

14. Struktur nach den Ansprüchen 11 und 13, bei der von den Enden des oberen Rohrs (30) mindestens das Ende (202) nicht abgeflacht ist, das mit dem Rastbefestigungsbauteil (24) verbunden ist.

15. Struktur nach einem der Ansprüche 1 bis 12, bei der mindestens einige der Enden der Rohre (30, 32, 34) abgebogen sind.

16. Struktur nach Anspruch 1 mit einem Rastbefestigungsbauteil (24), bei der ein Ende jedes der seitlich beabstandeten Rohre (32, 34) mit dem Rastbefestigungsbauteil verbunden ist, wobei ein weiteres Rohr (30) mit dem Rastbefestigungsbauteil verbunden und von den seitlich beabstandeten Rohren beabstandet ist.

17. Struktur nach Anspruch 1 mit einem Rastbefestigungsbauteil (24), einem Paar Türgelenk-Konstruktionsbauteilen (ein unteres Türgelenkbauteil 28 und ein oberes Türgelenkbauteil 26), die vertikal voneinander beabstandet sind, wenn sie in einem Fahrzeug befestigt sind, seitlich beabstandeten Rohren (32, 34), die mit dem unteren Gelenkbauteil und dem Rastbefestigungsbauteil verbunden sind, einem weiteren Rohr (30), das das obere Gelenkbauteil mit dem Rastbefestigungsbauteil verbindet und sich im wesentlichen horizontal von dem oberen Gelenkbauteil zum Rastbefestigungsbauteil erstreckt, wenn es im Fahrzeug befestigt ist.

18. Struktur nach einem der vorhergehenden Ansprüche, die weiterhin ein Stück eines Türteils (z.B. eine Fenster-Einstellungsvorrichtllng 92, eine Glasführung, eine Rastbaugruppe 48, eine innere Auslöse-Handgriffbaugruppe 94, eine Verschlußknopfbaugruppe 112 und Türgelenkhälften) aufweist, das an der Struktur vorinstalliert ist.

19. Struktur nach Anspruch 18, wenn er von Anspruch 4 oder Anspruch 12 abhängt, mit einer einfach gestanzten Platte oder ähnlichem (96) mit einem gerollten Abschnitt, die an dem weiteren oder dem oberen Rohr (30) und an dem inneren Rohr (32) des Paares der seitlich beabstandeten Rohre (32, 34) befestigt ist.

20. Fahrzeugtür, die die Struktur irgendeines vorhergehenden Anspruchs verkörpert.

21. Fahrzeugtür (22) mit einem Türrahmen (142, 144, 146, 148) und einem Strukturmodul, wobei das Strukturmodul ein Rastbefestigungsbauteil (24), ein unteres Türgelenkbauteil (28) und ein oberes Türgelenkbauteil (26), die voneinander beabstandet sind, wenn sie in einem Fahrzeug befestigt sind, ein oberes Rohr (30), das das obere Gelenkbauteil mit dem Rastbefestigungsbauteil verbindet und sich im wesentlichen horizontal vom oberen Gelenkbauteil zum Rastbefestigungsbauteil erstreckt, wenn es im Fahrzeug befestigt ist, und ein Paar seitlich beabstandete Rohre (32, 34) aufweist, die das obere Gelenkbauteil mit dem Rastbefestigungsbauteil verbinden, wobei der Türrahmen eine vordere Schließfläche (150) hat, die Öffnungen (152, 154) zur Durchführung der Gelenkbauteile (26, 28) trägt, und wobei die seitlich beabstandeten Rohre (32, 34) eine verstärkende Struktur für die Tür bereitstellen, so daß bei einem seitlichen Aufprall auf die Tür ein Rohr vor dem anderen verformt wird.

## Revendications

1. Structure de renforcement convenant pour une utilisation dans une porte de véhicule, la structure de renforcement comprenant deux tubes (32,34) espacés latéralement l'un de l'autre de sorte que, en cas d'impact sur la porte, un dit tube est déformé avant l'autre.

2. Structure suivant la revendication 1, comprenant un élément de montage (24), une extrémité de chaque tube (32,34) étant connectée à l'élément de montage.

3. Structure suivant la revendication 2, dans laquelle ledit élément de montage comprend une partie de montage de verrou (24).

4. Structure suivant la revendication 2 ou la revendication 3, dans laquelle on utilise au moins trois tubes (30,32,34), un autre tube (30) étant connecté à l'élément de montage (24) et espacé des dits deux tubes latéralement espacés (32,34).

5. Structure suivant une quelconque des revendications précédentes, comprenant en outre une partie de montage de charnière (26,28).

6. Structure suivant une quelconque des revendications précédentes, dans laquelle lesdits deux tubes (32,34) s'étendent substantiellement dans des plans parallèles.

7. Structure suivant la revendication 6, dans laquelle lesdits deux tubes (32,34) sont sensiblement parallèles l'un à l'autre.

8. Structure suivant une quelconque des revendications 1 à 5, dans laquelle les tubes latéralement espacés (32,34) sont orientés de façon à converger ou diverger finalement mais ils restent effectivement latéralement espacés, entre les bords des extrémités extérieures de la porte du véhicule.

9. Structure suivant une quelconque des revendications précédentes, dans laquelle le tube extérieur (34), lors de sa flexion, franchit le plan d'extension du tube intérieur (32), les deux tubes constituant alors un profilé de flexion composé qui continue à absorber l'énergie de déformation dans une plus grande mesure que le tube extérieur seul.

10. Structure suivant les revendications 6 et 9, dans laquelle, lors de la flexion, le tube extérieur (34) vient en contact avec le tube intérieur (32).

11. Structure convenant pour une utilisation dans une porte de véhicule, comprenant un agencement convergent de tubes (30,32,34) qui relient directement des éléments de charnière (26,28) à un élément de montage de verrou (24), constituant ainsi un chemin direct de transmission d'effort aux structures de montants d'entourage dans le cas d'un impact dans la direction longitudinale du véhicule, deux desdits tubes (32,34) étant connectés entre un élément inférieur de charnière (28) et l'élément de montage de verrou (24) et étant mutuellement espacés dans le sens latéral de la porte de sorte que, lors d'un choc latéral sur la porte, undit tube est déformé avant l'autre.

12. Structure suivant la revendication 11, comprenant un tube supérieur (30) qui s'étend d'un élément supérieur de charnière (26) à l'élément de montage de verrou (24) et qui agit comme un renforcement de ceinture intérieure.

13. Structure suivant la revendication 2, la revendication 5 ou la revendication 11, dans laquelle les extrémités des deux tubes latéralement espacés (32,34) sont aplaties à l'endroit de leurs connexions à l'élément de montage (24) et/ou à l'élément de charnière (26, 28).

14. Structure suivant les revendications 11 et 13, dans laquelle, parmi les extrémités du tube supérieur (30), au moins l'extrémité (202) connectée à l'élément de montage de verrou (24) n'est pas aplatie.

15. Structure suivant une quelconque des revendications 1 à 12, dans laquelle au moins certaines des extrémités des tubes (30,32,34) sont échancrées.

16. Structure suivant la revendication 1, comprenant un élément de montage de verrou (24), une extrémité de chaque tube latéralement espacé (32,34) étant connectée à l'élément de montage de verrou, un autre tube (30) étant connecté à l'élément de montage de verrou et espacé des tubes latéralement espacés.

17. Structure suivant la revendication 1, comprenant un élément de montage de verrou (24), deux éléments d'assemblage de charnière de porte (un élément inférieur de charnière de porte (28) et un élément supérieur de charnière de porte (26)) verticalement espacés l'un de l'autre lorsqu'ils sont montés dans un véhicule, des tubes latéralement espacés (32,34) étant connectés à l'élément inférieur de charnière et à l'élément de montage de verrou, un autre tube (30) reliant l'élément supérieur de charnière à l'élément de montage de verrou et s'étendant sensiblement horizontalement de l'élément supérieur de charnière à l'élément de montage de verrou lorsqu'ils sont montés dans le véhicule.

18. Structure suivant une quelconque des revendications précédentes, comprenant en outre au moins un élément d'équipement de porte (par exemple, un régulateur de vitre (92), un guidage de vitre, un dispositif de verrouillage (48), une poignée d'ouverture intérieure (94), un bouton de verrouillage (112) et des demi-charnières de porte) préinstallé sur la structure.

19. Structure suivant la revendication 18 lorsqu'elle dépend de la revendication 4 ou de la revendication 12, comprenant un élément embouti unique, un profilé laminé unique, une plaque unique ou analogue (96) qui est attaché audit autre tube ou tube supérieur (30) et au tube intérieur (32) de la paire de tubes latéralement espacés (32,34).

20. Porte de véhicule utilisant la structure suivant une quelconque des revendications précédentes.

21. Porte de véhicule (22) comprenant un cadre de porte (142,144,146,148) et un module structurel, le module structurel comprenant un élément de montage de verrou (24), un élément inférieur de charnière de porte (28) et un élément supérieur de charnière de porte (26) mutuellement espacés lorsqu'ils sont montés dans un véhicule, un tube supérieur (30) connectant l'élément supérieur de charnière à l'élément de montage de verrou et s'étendant sensiblement horizontalement de l'élément supérieur de charnière à l'élément de montage de verrou lorsqu'ils sont montés dans le véhicule, et deux tubes latéralement espacés (32,34) connectant l'élément inférieur de charnière à l'élément de montage de verrou, le cadre de porte présentant une face avant fermée (150) dans laquelle sont prévues des ouvertures (152,154) pour le passage des éléments de charnière (26,28), les tubes latéralement espacés (32,34) constituant une structure de renforcement pour la porte de sorte que, lors d'un impact latéral sur la porte, undit tube est déformé avant l'autre.
